# EUROPÄISCHE PATENTANMELDUNG

(11) **EP 1 020 815 A2**
(43) Veröffentlichungstag der Anmeldung: **19.07.2000**
(21) Anmeldenummer: 00250123.7
(22) Anmeldetag: 18.04.1997
(51) Int. Cl.: G06N 5/04, G06F 11/22

(54) **Vorrichtung und Verfahren zur automatischen Diagnose eines technischen Systems mit effizienter Wiederverwendung von Informationen**

(30) Priorität: 19.04.1996 DE 19617109
(62) Teilanmeldung aus: 97920731.3
(71) Anmelder: DaimlerChrysler AG, 70567 Stuttgart (DE)
(72) Erfinder: Die Erfindernennung liegt noch nicht vor
(74) Vertreter: Lindner-Vogt, Karin

(57) **Zusammenfassung**

Die Erfindung beschreibt eine Vorrichtung zur modellbasierten Diagnose eines technischen Systems. Eine Vorrichtung nach dem Oberbegriff der Erfindung bestimmt, welcher Parameter jeweils als nächstes gemessen wird, und leitet aus Werten für bestimmte Parameter weitere Parameterwerte ab. Für diese oft als "Propagierung von Werten" bezeichneten Vorgang nutzt die Vorrichtung eine Bibliothek mit Modellen der Komponententypen und ein Modell für den Aufbau des zu diagnostizierenden technischen Systems.

Aufgabe der Erfindung war es, die Ergebnisse von Werte-Propagationen, also abgeleitete Parameterwerte, effizient wiederzufinden. Die Diagnosevorrichtung soll Inferenzen für nur jeweils eine gegebene Wertebelegung von Eingangsparametern und eine Zuordnung von Verhaltensmodi an Komponenten durchführen und dennoch die Ergebnisse dieser Inferenzen für andere Wertebelegungen oder andere Zuordnungen von Verhaltensmodi wiederverwenden. Die Erfindung lehrt einen bestimmten Aufbau eines "fokussierenden Reason Maintenance System", das ist ein Mechanismus, der die Zusammenhänge zwischen verschiedenen Parameterwerten während einer Diagnose verwaltet. Idee ist, den Fokus des RMS in bestimmter Weise zu unterteilen und dadurch erheblich Rechenzeit zu sparen.
Eine vorteilhafte Ausgestaltung lehrt die Generierung eines Entscheidungsbaumes.

## Beschreibung

Die Erfindung bezieht sich auf eine Einrichtung zur automatischen Diagnose eines technischen Systems gemäß dem Oberbegriff des Anspruchs 1.

Aufgabe der technischen Diagnose ist es, in einem bestimmten technischen System (tS) die vorhandenen Komponentenfehler zu lokalisieren. Hierfür sind Werte von Parametern an tS zu messen. Der Stand der Technik kennt verschiedene Verfahren und Einrichtungen, um ein technisches System tS durch Auswertung eines Modells von tS zu diagnostizieren. Bekanntlich ist es oft mit hohem Aufwand verbunden, ein zureichend genau mit der Realität übereinstimmendes Modell aufzustellen. Um diesen Aufwand dann, wenn im technischen System mehrere gleichartige Komponenten eingebaut sind oder wenn mehrere ähnliche technische Systeme zu modellieren und dann zu diagnostizieren sind, zu reduzieren, wurden Ansätze entwickelt, den Diagnosegegenstand mit einem komponenten-orientierten Modell zu beschreiben. Das Modell spiegelt also den Aufbau des technischen Systems in Komponenten wider. Der Oberbegriff der Erfindung fällt in diese Kategorie. Viele Modellierungsansätze aus der Regelungstechnik, z. B. Differentialgleichungen, sind hingegen nicht komponentenorientiert.

Ein menschlicher Experte muß diejenigen Informationen über Aufbau und Wirkungsweise des technischen Systems tS und über die möglichen Fehler und deren Ermittlung, die - die Diagnoseeinrichtung für die Fehlersuche benötigt, einmal vorab in die Diagnoseeinrichtung eingeben. Dieser Vorgang, der oft als Wissenserwerb bezeichnet wird, ist zeitaufwendig und fehleranfällig. Daher ist es eine prinzipielle Herausforderung, die Diagnoseeinrichtung so zu gestalten, daß sie mit möglichst wenig Eingabe-Informationen auskommt und möglichst viele der benötigten Informationen aus den Eingabe-Informationen automatisch erzeugt.

Der Oberbegriff des vorliegenden Patentanspruchs wird in dem Übersichtsartikel von RANDALL DAVIS & WALTER HAMSCHER: "Model-Based Reasoning: Troubleshooting", in: WALTER HAMSCHER & LUCA CONSOLE & RANDALL DAVIS: "Readings in Model-Based Diagnosis", Morgan Kaufmann Publ. (1992), beschrieben. Jede Komponente von tS besitzt verschiedene Verhaltensmodi, im einfachsten Fall die Modi "intakt" und "defekt". Eine Diagnose ordnet jeder Komponente einen Verhaltensmodus zu und spezifiziert damit, welche Komponenten defekt sind.

Der Begriff Diagnose wird in zwei Bedeutungen verwendet: Zum einen für den Vorgang, um die Fehler am technischen System tS zu finden, zum anderen für das Ergebnis dieser Suche.

Das physikalische Verhalten jeder Komponente, die in tS mindestens einmal eingebaut ist, beschreibt man einmal, indem man die Eingangs- und Ausgangsparameter sowie die internen Parameter der Komponente definiert und die Zusammenhänge zwischen den Parametern als Relationen *(constraints)* beschreibt. Eine besondere Art von Parametern einer Komponente sind die Verhaltensmodi der Komponente. Die *constraints* einer Komponente können sowohl allgemeingültig sein als auch bestimmten Verhaltensmodi der Komponente zugeordnet sein, was bedeutet, daß sie nur gelten, wenn die Komponente den jeweilige Verhaltensmodus eingenommen hat.

Die modellbasierte Diagnose setzt voraus, daß man das Verhalten der Komponenten lokal beschreiben kann, d. h. die Belegung der Parameter jeder Komponente mit Werten hängt nur von der Wertebelegung von anderen Parametern derselben Komponente ab. Dann braucht man nämlich jeden Typ von Komponente nur einmal zu beschreiben; die Diagnoseeinrichtung kann diese Beschreibung wiederverwenden. Dies reduziert die Menge an erforderlichen Eingabe-Informationen entscheidend. Die Technik der modellbasierten Diagnose ist insbesondere dann im Vergleich zu anderen Verfahren vorteilhaft, wenn die zu beschreibenden Komponenten einfacher Natur sind (z. B. elektrische oder hydraulische Komponenten) und in großer Stückzahl in tS eingebaut sind.

Die Diagnoseeinrichtung wertet also eine Bibliothek mit der Beschreibung aller Komponententypen aus, außerdem ein Aufbaumodell des technischen Systems. Dieses Aufbaumodell beschreibt, wie die Komponenten miteinander verbunden sind. Eine Komponente Komp_1 ist mit einer Komponente Komp_2 dadurch verbunden, daß der Parameter Para_1 an Komp_1 mit einem Parameter Para_2 an Komp_2 identifiziert wird. Außerdem beschreibt das Aufbaumodell, von welchem Typ jede Komponente ist. Die Diagnoseeinrichtung baut automatisch das Modell des technischen Systems tS aus den Beschreibungen der Komponententypen und dem Aufbaumodell auf.

Die meisten bekannten Diagnoseverfahren und auch die erfindungsgemäße Diagnoseeinrichtung setzen voraus, daß die technische Beschreibung des zu diagnostizierenden Systems tS sich während einer Diagnose nicht ändert, d. h. die Bibliothek mit Modellen von Komponententypen sowie das Aufbaumodell sind die gesamte Diagnose über gültig. Damit ist die Menge der theoretisch möglichen Diagnosen zu Beginn der Diagnose festgelegt: Jede Zuordnung von Verhaltensmodi an alle Komponenten des technischen Systems ist eine möglichen Diagnose. Die Diagnoseeinrichtung schränkt die extrem große Menge der möglichen Diagnosen während des Diagnosevorganges iterativ ein. Die wichtigste Art der Einschränkung ist die, daß Parameter mit gemessenen oder beobachteten Werten belegt werden. Jedes modellbasierte Verfahren bestimmt während der Diagnose mehrmals, welche Diagnosen angesichts der bislang ermittelten Parameterwerte noch möglich sind. Hierfür ordnet das Verfahren einigen Komponenten probeweise Verhaltensmodi zu und ermittelt, welche Werte bestimmte Parameter des technischen Systems bei dieser Zuordnung - die oft Hypothese genannt wird - annehmen müßten. Stimmt diese Vorhersage nicht mit den Messungen überein, so ist die Hypothese widerlegt, und sie wird zurückgezogen.

Praktisch alle Diagnoseverfahren, die der Stand der Technik kennt, und auch eine Diagnoseeinrichtung gemäß des Oberbegriffs der vorliegenden Erfindungen arbeiten mit einer Inferenzmaschine. Eine Inferenzmaschine schließt (sie "inferiert" oder "propagiert") wiederholt aus bereits berechneten oder auch gemessenen Werten von Parametern aufgrund des Modells von tS auf Werte von weiteren Parametern. Mechanismen wurden entwickelt, um bereits erzielte Berechnungsergebnisse wiederzuverwenden, anstelle sie erneut zu berechnen. Berechnungsergebnisse dürfen natürlich nur dann wiederverwendet werden, wenn der Kontext, der bei den Berechnungen vorausgesetzt wurde, noch gilt. Diese Mechanismen speichern und "verwalten" Parameterwerte von Wertekontexten, das sind Belegungen von Parametern mit Werten. Ein solcher Mechanismus wird als "Reason Maintenance System" (RMS) oder auch "Truth Maintenance System" (TMS) bezeichnet. Bevor die Inferenzmaschine Parameterwerte ableitet, "konsultiert" sie das RMS nach bereits bekannten Parameterwerten.

In der bereits zitierten Arbeit von RANDALL DAVIS & WALTER HAMSCHER: "Model-Based Reasoning: Troubleshooting", in: WALTER HAMSCHER & LUCA CONSOLE & RANDALL DAVIS: "Readings in Model-Based Diagnosis", Morgan Kaufmann Publ. (1992), wird die Verwendung eines speziellen RMS für die modellbasierte Diagnose beschrieben, das "Assumption-Based Truth Maintenance System", und zwar als "enabling technology" für die "General Diagnostic Engine" (GDE), das ist eine Klasse von Diagnoseeinrichtungen. In KEN FORBUS & JOHAN DE KLEER: "Building Problem Solvers", MIT Press (1993), werden verschiedene Arten von RMS beschrieben.

In HENRI BERINGER & BRUNO DE BACKER: "Diagnosing systems modeled with piecewise linear constraints", Proceed. TAI90 - Tools for Artificial Intelligence, Herndon, November 6 - 9 (1990) ist ein Verfahren beschrieben, wie das Modell vorab so umgeformt werden kann, daß die Arbeit der Inferenzmaschine nur wenig Zeit in Anspruch nimmt. Da diese Umformung vorab durchgeführt wird, hängt sie nicht von Parameterwerten ab, die während der Diagnose gewonnen werden. Deshalb wird kein Weg aufgezeigt, wie aus gemessenen Werten und aus Hypothesen über Verhaltensmodi schnell weitere Werte abgeleitet werden.

Der Stand der Technik kennt eine Klasse von Verfahren und Einrichtungen, um den Laufzeitbedarf des RMS einzuschränken, nämlich das fokussierende RMS. Ein "Fokus" ist ein Speicher, der als Schnittstelle zwischen Inferenzmaschine und RMS fungiert. Die Inferenzmaschine schreibt in den Fokus Wertekontexte, also Wertebelegungen von Parametern. Oft sind dies die aktuell plausibelsten der noch möglichen Diagnose, also bestimmte Verhaltensmodi von Komponenten; durch weitere Messungen können zuvor plausible Diagnosen widerlegt werden.

Nur für die Wertekontexte im Fokus verwaltet das RMS die Abhängigkeiten vollständig. Immer dann, wenn die Inferenzmaschine den Fokus verändert, bestimmt das RMS erneut Abhängigkeiten. Verschiedene Arten des fokussierenden RMS werden im Buch von KEN FORBUS & JOHAN DE KLEER vorgestellt, nämlich das JTMS (pp. 171 - 194) und das LTMS (pp. 265 - 305). Eine besonders effiziente Ausgestaltung eines fokussierenden RMS ist das 2-view-ATMS, das durch MUGUR TATAR: "Combining the Lazy Label Evaluation with Focusing Techniques in an ATMS", Proceed. 11th European Conference on Artificial Intelligence, Amsterdam (1994) bekannt ist.

In C. A. CATINO et al., "Automatic generation of quality models of chemical process units", Computers & chemicals engineering, Vol. 15 No. 8, pp. 583 - 599 (1991), wird beschrieben, wie ein Modell eines technischen Systems automatisch aus wiederverwendbaren Modellen von Komponenten, die in einer Bibliothek abgespeichert sind, erzeugt wird. Die in C. A. CATINO et al. beschriebene Anwendung ist ein chemischer Prozeß, und die Komponenten sind Teilprozesse. Diese Komponentenmodelle enthalten
o "quality conditions"
o "relations" (quantitative Vorschriften, wie Modellparameter aus anderen Modellparametern bestimmt werden können)
o "influences" (qualitative Beschreibungen, wie Parameter auf andere Parameter einwirken)
Genannt werden außerdem "operating assumptions" (Betriebsbedingungen).

Im Artikel wird erwähnt, daß man das Modell für Diagnose benutzen kann: Man kann Meßwerte mit Sollwerten, die durch Auswertung des Modells vorhergesagt werden, vergleichen und von Abweichungen zwischen diesen Werten auf Fehler am technischen System schließen.

Drei Fokussierungstechniken für den Zweck, das Modell unter bestimmten Betriebsbedingungen durchzurechnen, werden im Artikel von C. A. CATINO ET AL. genannt. Wer die Informationen auswählt, die im Fokus abgespeichert werden, wird nicht erwähnt. Offenbar wählt ein menschlicher Benutzer sie einmal aus, und während der Modellgenerierung bleibt der Fokus unverändert. Deshalb kann der Fokus nicht abhängig sein von Meßergebnissen, die im Verlaufe der Diagnose gewonnen wurde. Er kann daher insbesondere nicht diejenigen Diagnosen enthalten, die aufgrund der bisherigen Messungen am wahrscheinlichsten oder am plausibelsten sind.

Ergebnisse von Inferenzen können von zwei Arten von Einflußgrößen abhängen:
- davon, mit welchen Werten frei wählbare Eingangsparameter des technischen Systems belegt sind
- und davon, in welchen Verhaltensmodi sich Komponenten des technischen Systems befinden.

Der Stand der Technik kennt mehrere Verfahren, wie die Inferenzmaschine für eine einzige Wertebelegung von Eingangsparametern aus den Meßwerten weitere Parameterwerte sowie mögliche Diagnosen ableitet. Offensichtlich wird aber Laufzeit eingespart, wenn für eine andere Wertebelegung von Eingangsparametern diejenigen Inferenzergebnisse wiederverwendet werden, die bei der alten und bei der neuen Wertebelegung gültig ist.

In OSKAR DRESSLER & HARTMUT FREITAG: "Prediction Sharing Across Time and Contexts", Proceed. 12th National Conference on Artificial Intelligence, Seattle (USA), pp. 1136 - 1141 (1994), wird diese Aufgabe erstmals behandelt - dort so formuliert, daß Ergebnisse von Inferenzen für verschiedene Zeitpunkte wiederverwendet werden. In dieser Arbeit wird vorgestellt, wie Annahmen für zeitliche Aspekte modelliert werden. Jedoch wird kein Weg aufgezeigt, wie man die Schnittstelle zwischen RMS und Inferenzmaschine auslegt und wie diese Schnittstelle gesteuert wird. Kein Weg wird aufgezeigt, wie einerseits Berechnungen nur für jeweils einen Zeitpunkt durchgeführt werden, jedoch trotzdem Inferenzergebnisse für verschiedene Zeitpunkte wiederverwendet werden können.

Die Aufgabe, die der Erfindung zugrundelag, war es, eine modellbasierte Einrichtung zur Diagnose eines aus Komponenten aufgebauten technischen Systems zu schaffen, die das technische System schnell und mit möglichst geringem Aufwand diagnostiziert.

Die Anforderung nach einer schnellen Diagnose bedeutet insbesondere: Die Diagnoseeinrichtung soll Inferenzen für nur jeweils eine gegebene Wertebelegung von Eingangsparametern und eine Zuordnung von Verhaltensmodi an Komponenten durchführen und dennoch die Ergebnisse dieser Inferenzen für andere Wertebelegungen oder andere Zuordnungen von Verhaltensmodi wiederverwenden. Um zu notieren, von welchen Wertebelegungen und / oder Zuordnungen Inferenzergebnisse abhängen, soll die Diagnoseeinrichtung ein RMS besitzen.

Damit die Diagnoseeinrichtung möglichst schnell arbeitet und nur die jeweils erforderlichen Berechnungen durchführt, wurde der Fokus als Schnittstelle zwischen Inferenzmaschine und RMS in erfinderischer Weise gestaltet.

Eine Diagnoseeinrichtung nach dem Oberbegriff der Erfindung besitzt zwei Informationsverarbeitungseinrichtungen als Bestandteile:
o eine Diagnosemaschine, die die Arbeit der anderen Komponenten der Diagnoseeinrichtung steuert und die die Fehlersuche durchführt
o und eine Inferenzmaschine, die aus den bereits bekannten Werten von Parametern weitere Parameter ableitet.

Die Bibliothek mit Modellen von Komponententypen ist im Speicher S1 abgelegt, das Aufbaumodell im Speicher S2. Im Verlaufe der Diagnose werden - im Regelfall wiederholt - Parameterwerte ermittelt und Annahmen über Verhaltensmodi von Komponenten getroffen. Diese Meßergebnisse und Annahmen werden formal alle als Werte von Parametern behandelt. Eine solche Belegung verschiedener Parameter mit Werten wird im folgenden als Wertekontext bezeichnet. Wertekontexte werden in einem Speicher S3 (permanent oder flüchtig) abgelegt. In S3 können verschiedene Wertekontexte abgespeichert sein, unter denen die Diagnosemaschine einen ausgewählt, z. B. den plausibelsten. Die Parameterwerte, die die Inferenzmaschine aus den Wertekontexten in S3 ableitet, werden im Speicher S4 abgespeichert. Die Inferenzmaschine wertet für diese Ableitungen die Bibliothek in S1 und das Aufbaumodell in S2 aus.

Zur Aufgabenstellung gehört insbesondere folgendes Ziel: Die Diagnoseeinrichtung soll Inferenzen für nur jeweils eine gegebene Wertebelegung von Eingangsparametern und eine Zuordnung von Verhaltensmodi an Komponenten durchführen und dennoch die Ergebnisse dieser Inferenzen für andere Wertebelegungen oder andere Zuordnungen von Verhaltensmodi wiederverwenden. Die Erfindung nach **Anspruch 1** stellt eine Einrichtung für dieses Ziel bereit.

Die Einrichtung gemäß dem Oberbegriff des Anspruchs 1 besitzt eine Diagnosemaschine, eine Inferenzmaschine und ein Reason Maintenance System (RMS). Die Arbeitsweise dieser drei Informationsverarbeitungseinheiten und die Bedeutung der Speicher wurde bereits oben beschrieben.

Grundlage der Erfindung ist folgende Überlegung: Die Gültigkeit der *constraints -* also der Vorschriften, die die Abhängigkeiten zwischen Parametern beschreiben - wird durch die Verhaltensmodi bestimmt, in denen sich die Komponenten befinden. Alle anderen Werte von Parametern des technischen Systems tS resultieren aus der gegebenen Situation und der gegebenen Belegung mit Verhaltensmodi. Solange sich weder die Situation noch die Verhaltensmodi der Komponenten ändern, können sich auch nicht die anderen Werte ändern. Daher werden für die Werte, die die Inferenzmaschine abgeleitet hat, die jeweiligen Verhaltensmodi und Situationen notiert.

Die Erfindung lehrt, wie die Schnittstelle zwischen Inferenzmaschine und RMS gestaltet wird. Idee ist, streng zu unterscheiden zwischen Fakten, die man als sicher ansieht und die die Diagnosemaschine im Verlaufe der Diagnose niemals zurückzieht, und Hypothesen, die widerlegt werden können und die die Diagnosemaschine daher zurückziehen kann. Beispiele für Fakten sind Belegungen von frei einstellbaren Parametern mit Werten, z. B. "Motor einstellen" sowie Beobachtungen, deren Gültigkeit nicht in Zweifel gezogen werden. Beispiele von Hypothesen sind probeweise Zuordnungen von Verhaltensmodi an Komponenten, denn zusätzliche Beobachtungen können diese Hypothesen widerlegen, sowie Beobachtungen, die man als unsicher einstuft. Sowohl Fakten als auch Hypothesen werden in der Diagnoseeinrichtung als Wertekontexte, also als Informationen über die Belegung von Parametern des technischen Systems mit bestimmten Werten, abgespeichert.

Eine Einrichtung nach dem Oberbegriff des Anspruchs verwendet ein fokussierendes RMS (dritte Informationsverarbeitungseinheit und Speicher S3), das in der Beschreibung des Standes der Technik vorgestellt wurde. Die Idee der Erfindung ist, daß nicht ein einziger Fokus verwendet wird, sondern zwei externe Foki und ein interner Fokus.
o Im *permanenten Fokus* (Unterspeicher S3.1) werden die Fakten abgespeichert.
o Im *zurückziehbaren Fokus* (Unterspeicher S3.2) werden die Hypothesen abgespeichert.
o Das RMS setzt aus diesen beiden externen Foki seinen *internen Fokus* (Speicher S7) zusammen, indem es jeden Wertekontext im permanenten Fokus durch logische Konjunktion (UND-Verknüpfung) mit jedem Wertekontext im zurückziehbaren Fokus verbindet.

Ein Beispiel erläutert diese logische Konjunktion, die das RMS automatisch durchführt:
o Im permanenten Fokus seien diese beiden Wertekontexte abgespeichert:
   { (Para_1 = Wert_1 und Para_2 = Wert_2), (Para_3 = Wert_3) }
o Im zurückziehbaren Fokus seien diese beiden Wertekontexte abgespeichert:
   { (Para_4 = Wert_4), (Para_5 = Wert_5 und Para_6 = Wert_6) }
o Dann trägt das RMS folgende Wertekontexte in S7 ein:
   { (Para_1 = Wert_1 und Para_2 = Wert_2 und Para_4 = Wert_4), Para_1 = Wert_1 und Para_2 = Wert_2 und Para_5 = Wert_5 und Para_6 = Wert_6), (Para_3 = Wert_3 und Para_4 = Wert_4), (Para_3 = Wert_3 und Para_5 = Wert_5 und Para_6 = Wert_6) }

Jede Veränderung im externen Fokus führt dazu, daß das RMS seinen internen Fokus aktualisiert. Das RMS arbeitet so wie vom Stand der Technik her bekannt, aber basierend auf dem Wertekontext in S7. Es notiert in S5 die Zusammenhänge zwischen den Wertekontexten in S7 und denen in S4.

Welchen Vorteil diese Architektur bietet, wird deutlich, wenn das RMS einen Konflikt findet. Wie vom Stand der Technik her bekannt, übermittelt das RMS der Inferenzmaschine einen Konflikt, also einen widerlegten Wertekontext. Ein Beispiel: Daß { Para_1. = Wert_1 und Para_2 = Wert_2 } ein Konflikt ist, bedeutet, daß der Wert von Para_1 ungleich Wert_1 oder der Wert von Para_2 ungleich Wert_2 sein müssen. Die Inferenzmaschine in einer erfindungsgemäßen Diagnoseeinrichtung trennt die Fakten, die am Konflikt beteiligt sind, von den Hypothesen. Da die Fakten als sicher gelten und nicht zurückgezogen werden können, wird der Konflikt auf die Hypothesen reduziert. Die Inferenzmaschine streicht alle Wertekontexte, in denen eine im Konflikt auftretende Hypothese enthalten ist, aus dem zurückziehbaren Fokus. Abhängig vom gewählten Diagnoseverfahren wird der zurückziehbare Fokus automatisch mit weiteren Hypothesen aufgefüllt oder auch nicht, der Stand der Technik kennt unter dem Stichwort "Kandidatengenerierung" verschiedene Verfahren für dieses "Auffüllen". Das RMS aktualisiert anschließend seinen internen Fokus so wie oben beschrieben.

Eine vorteilhafte Ausgestaltung der Einrichtung nach Anspruch 1 diagnostiziert ein besonders einfaches technisches System, nämlich ein statisches System. Das System ist dann statisch, wenn die Verhaltensmodi aller seiner Komponenten sich im Verlaufe der Diagnose nicht ändern. Insbesondere fällt also nicht eine Komponente während der Diagnose aus (sondern nur vorher), und man erneuert auch keine Komponente während der Diagnose.

Gemäß **Anspruch 2** werden alle Situationen, die im Verlaufe der Diagnose eingestellt oder zumindest in Betracht gezogen werden, im permanenten Fokus abgespeichert. Denn die Situationen werden nicht widerlegt und daher nicht zurückgezogen. In den zurückziehbaren Fokus (Unterspeicher S3.2) werden - wie in Anspruch 1 - die Hypothesen abgespeichert, zu denen Annahmen über Verhaltensmodi von Komponenten gehören.

Im allgemeinen Fall darf man nicht voraussetzen, daß das technische System statisch ist. In einem dynamischen System kann sich der Verhaltensmodus einer Komponente im Verlaufe der Diagnose ändern - etwa aufgrund von verschiedenen Situationen, die nacheinander am technischen System eingestellt werden. Ein solcher Verhaltensmodus wird üblicherweise als "Zustand" bezeichnet. Damit Ergebnisse von Berechnungen wiederverwendet werden können, benötigt die Inferenzmaschine eine separate Registrierung (der zusätzliche Speicher S8), in der für jeden Zeitpunkt t, an dem ein Parameterwert gemessen oder eingestellt wird, die Situation zum Zeitpunkt t sowie die Zustandsmengen zu diesem Zeitpunkt abgespeichert werden (Anspruch 3). Wie eine solche Registrierung gebaut und gesteuert wird, ist aus MUGUR TATAR: "Diagnosis with Cascading Defects". Proceed. 6th Intern. Workshop on Principles of Diagnosis (DX '95), pp. 107 - 114, Goslar (1995), bekannt. Die vorteilhafte Ausgestaltung lehrt, eine derartige Registrierung in Verbindung mit der Erfindung nach Anspruch 1 in einer Diagnoseeinrichtung einzusetzen.

Im Speicher S8 werden die Zeitpunkte mit den jeweiligen Situationen und Zustandsmengen registriert, d. h. abgespeichert. Im ersten Unterspeicher (S3.1), also im permanenten Fokus, werden die Situationen und im zweiten Unterspeicher (S3.2) die Zustandsmengen abgespeichert.

Für viele Anwendungen der technischen Diagnose wird die Anforderung gestellt, daß die Diagnoseeinrichtung schnell diagnostizieren soll und trotzdem mit möglichst wenig Speicherplatz und Rechenleistung auskommen soll. Manchmal wird sogar Echtzeitfähigkeit gefordert. Eine vorteilhafte Ausgestaltung der vorliegend beschriebenen Erfindung löst die Anforderung in Verbindung mit der Aufgabenstellung, daß die Diagnoseeinrichtung mit möglichst wenigen Eingabe-Informationen auskommt.

Der Stand der Technik kennt die Datenstruktur des Entscheidungsbaumes als eine Art, um die Informationen abzuspeichern, die eine Informationsverarbeitung benötigt, um eine Klassifikationsaufgabe zu lösen. Entscheidungsbäume werden beispielsweise in J. Ross QUINLAN: "Introduction of Decision Trees", Machine Learning Vol. 1, pp. 81 - 106 (1986) vorgestellt. Technische Diagnose ist eine solche Klassifikationsaufgabe. Die Idee der vorteilhaften Ausgestaltung nach **Anspruch 4** ist die, daß die Diagnoseeinrichtung in einer ersten Phase automatisch einen Entscheidungsbaum abarbeitet. Kennzeichnend ist, daß zur Generierung des Entscheidungsbaumes ausschließlich die ohnehin vorhandenen Eingabe-Informationen ausgewertet werden und keine zusätzlichen Eingabe-Informationen benötigt werden.

Die Diagnoseeinrichtung besitzt demnach zwei weitere Informationsverarbeitungseinrichtungen: den Generierer und den Abarbeiter. Diese Aufteilung in Generierer und Abarbeiter ist aus folgendem Grunde von Vorteil. Zur "eigentlichen" Diagnose des technischen Systems wird nur der Abarbeiter benötigt. Auch dann, wenn mehrere gleichartige technische Systeme im Einsatz sind und diagnostiziert werden müssen, wird nur ein Generierer benötigt, und lediglich der Abarbeiter muß mehrmals gebaut werden. Welchen Vorteil dies hat, macht das Beispiel der Diagnose von Kraftfahrzeugen deutlich: Nur der Abarbeiter braucht in Hunderten von Werkstätten eingesetzt zu werden. Der Generierer braucht hingegen nur einmal gebaut zu werden, die erzeugten Entscheidungsbäume werden an die Werkstätten ausgeliefert.

Wie aus dem Stand der Technik bekannt, ist ein Entscheidungsbaum ein gerichteter Graph mit Knoten und Kanten, der eine einzige Wurzel (Knoten ohne Vorgänger) und mehrere Blätter (Knoten ohne Nachfolger) hat. Die vorteilhafte Ausgestaltung nach Anspruch 17 beschreibt die Struktur eines solchen Entscheidungsbaumes. Zwei Arten von Knoten werden gemäß Anspruch 4 unterschieden:
o Ergebnisknoten stehen für ein Zwischen- oder Endergebnis, das im Verlaufe der Diagnose erreicht wird. Daher hat jeder Ergebnisknoten einen Verweis auf eine Menge von Komponentenfehlern und einen auf eine Situation des technischen Systems.
o Entscheidungsknoten stehen für eine Entscheidung, die die Diagnoseeinrichtung aufgrund von zuvor durchgeführten Maßnahmen automatisch trifft.

Die Wurzel sowie die Blätter des Baumes sind Ergebnisknoten. Außer den Blättern hat jeder Ergebnisknoten einen einzigen Nachfolger, nämlich einen Entscheidungsknoten. Ein Entscheidungsknoten hat für jedes mögliche Ergebnis der zugeordneten Maßnahmen einen Nachfolger, nämlich einen Ergebnisknoten.

Wie ein technisches System durch Abarbeitung eines solchen Entscheidungsbaumes diagnostiziert wird, ist für den Fachmann offensichtlich:
o Der Abarbeiter beginnt in der Wurzel und hat dadurch einen Ergebnisknoten mit Nachfolger erreicht.
o Immer dann, wenn der Abarbeiter einen Ergebnisknoten mit Nachfolger erreicht hat, so "weiß" der Abarbeiter, daß die zugeordneten Komponentenfehler noch möglich sind und das technische System sich in der zugeordneten Situation befindet. Der Abarbeiter setzt die Diagnose im nachfolgenden Entscheidungsknoten fort.
o Immer dann, wenn der Abarbeiter einen Entscheidungsknoten erreicht hat, so werden die zugeordneten Maßnahmen ausgeführt. Der Abarbeiter setzt die Diagnose in demjenigen Ergebnisknoten fort, der zu dem Ergebnis der gerade ausgeführten Maßnahmen gehört.
o Die Diagnose ist beendet, wenn ein Blatt erreicht ist. Die zugeordneten Komponentenfehler sind diagnostiziert, das technische System ist in der zugeordneten Situation.

Die Verfahrensansprüche beschreiben den Funktionsablauf der erfindungsgemäßen Vorrichtung.

Hierbei beschreibt **Anspruch 5** die Funktionsweise und Aufgabe der einzelnen Maschinen, sowie die erfindungsgemäße automatische Zuordnung von Maßnahmen anhand des Komponententyps.

Die **Verfahrensansprüche 8** und **9** offenbaren ein Verfahren zur automatischen Generierung eines Abarbeiters, der aus einer Diagnosemaschine und einem statischen Entscheidungsbaum besteht. Hierzu wird das in der aufgeführten Literatur allgemein bekannte Verfahren zu Kandidatengenerierung verwendet. Weiterhin finden allgemein bekannte Aufwand-Nutzen-Heuristiken Anwendung. Der Abbruch des Verfahrens erfolgt, wenn ein Zweig sicher genug ist, d.h. wenn ein bestimmter Schwellwert unterschritten wird oder eine bestimmte Wahrscheinlichkeit erreicht wird.

## Patentansprüche

1. Vorrichtung zur automatischen Diagnose eines technischen Systems (tS),
das aus Komponenten aufgebaut ist, die
o eine erste Informationsverarbeitungseinheit (Diagnosemaschine)
o und eine zweiten Informationsverarbeitungseinheit (Inferenzmaschine)
o und eine dritte Informationsverarbeitungseinheit (RMS) besitzt,
besitzt,
in der die ersten beiden Informationsverarbeitungseinheiten Lesezugriff auf einen ersten Speicherbereich (S1) haben,
o in dem für jeden Komponententyp (Komp-Typ),
von dem mindesten ein Exemplar im technischen System vorhanden ist
Informationen abgespeichert sind,
zu denen die Information gehört,
welche Parameter diesen Komponententyp (Komp-Typ) kennzeichnen,
in der die ersten beiden Informationsverarbeitungseinheiten Lese- und Schreibzugriff auf einen zweiten Speicherbereich (S2) haben,
o in dem Informationen über den Aufbau des technischen Systems (tS) abgespeichert sind
und dabei für jede Komponente (Komp) des technischen Systems (tS) die Information abgespeichert ist,
- von welchem Komponententyp die Komponente (Komp) ist,
- welchen anderen Komponenten die Komponente (Komp) verbunden ist,
indem für jede andere Komponente (Komp_1),
die der Komponente (Komp) verbunden ist,
notiert ist,
welcher Parameter der Komponente (Komp) mit welchem anderen Parameter der verbundenen Komponente (Komp_1) identifiziert wird,
in der alle drei Informationsverarbeitungseinheiten Lese- und Schreibzugriff auf einen dritten Speicherbereich (S3) haben,
o in dem Wertekontexte abgespeichert werden können,
wobei ein Wertekontext eine Information über die Belegung von bestimmten Parametern des technischen Systems (tS) mit bestimmten Werten ist,
o und in dem mindestens zeitweise mindestens ein Wertekontext (WT) abgespeichert ist,
in der alle drei Informationsverarbeitungseinheiten Lese- und Schreibzugriff auf einen vierten Speicherbereich (S4) haben,
o in dem Wertekontexte abgespeichert und wieder gelöscht werden können,
in der die zweite und die dritte Informationsverarbeitungseinheit Lese- und Schreibzugriff auf einen fünften Speicherbereich (S5) haben,
o in dem Informationen über Zusammenhänge zwischen Wertekontexten abgespeichert werden können,
in der die erste Informationsverarbeitungseinheit (Diagnosemaschine)
o das technische System diagnostiziert
und in der die zweite Informationsverarbeitungseinheit (Inferenzmaschine) mindestens einmal während einer Diagnose
o für mindestens einen Wertekontext,
der im dritten Speicherbereich (S3) abgespeichert ist, durch Auswertung von Informationen,
die im ersten Speicherbereich (S1) abgespeichert sind, und durch Auswertung von Informationen,
die im zweiten Speicherbereich (S2) abgespeichert sind, den Wert mindestens eines anderen Parameters in Abhängigkeit von den Wertekontexten im dritten Speicherbereich (S3) ermittelt
und diese Informationen in Form eines Wertekontextes im vierten Speicherbereich (S4) abspeichert,
und in der die dritte Informationsverarbeitungseinheit (RMS) als Reason Maintenance System für den dritten Speicherbereich (S3) und den vierten Speicherbereich (S4) arbeitet,
das heißt, daß sie Informationen über die Zusammenhänge
- von Wertekontexten,
die im dritten Speicherbereich (S3) abgespeichert sind,
- oder von Kombinationen mehrerer Wertekontexte,
die im dritten Speicherbereich (S3) abgespeichert sind,
- mit Wertekontexten,
die zumindest zeitweilig im vierten Speicherbereich (S4) abgespeichert sind,
im fünften Speicherbereich (S5) abspeichert,
**dadurch gekennzeichnet,**
daß die Einrichtung zusätzlich einen siebten Speicherbereich (S7) besitzt,
o in dem ein Wertekontext abgespeichert werden kann,
o und auf den die dritte Informationsverarbeitungseinheit (RMS) Lese- und Schreibzugriff hat,
daß der dritte Speicherbereich (S3) in zwei Teil-Speicherbereiche unterteilt ist,
o wobei die Wertekontexte,
die im ersten Teil-Speicherbereich (S3.1) abgespeichert sind, als permanent gekennzeichnet sind,
das heißt während des gesamten Verlaufs der Diagnose nicht wieder aus diesem Teil-Speicherbereich (S3.1) gelöscht werden können
o und wobei die Wertekontexte,
die im zweiten Teil-Speicherbereich (S3.2) abgespeichert sind,
als zurückziehbar gekennzeichnet sind,
das heißt im Verlaufe der Diagnose wieder aus diesem Teil-Speicherbereich (S3.2) gelöscht werden können
und daß im siebten Speicherbereich (S7) jeder Wertekontext abgespeichert ist,
o der durch eine logische Konjunktion
- eines Wertekontextes aus dem ersten Teil-Speicherbereich (S3.1)
- und eines Wertekontextes aus dem zweiten Teil-Speicherbereich (S3.2)
entsteht,
und daß die dritte Informationsverarbeitungseinheit (RMS)
o immer dann, wenn der erste Teil-Speicherbereich (S3.1) um mindestens einen Wertekontext ergänzt wird,
o den Inhalt des siebten Speicherbereichs (S7) aktualisiert
und daß die dritte Informationsverarbeitungseinheit (RMS)
o immer dann, wenn der zweite Teil-Speicherbereich (S3.2) um mindestens einen Wertekontext ergänzt wird,
o den Inhalt des siebten Speicherbereichs (S7) aktualisiert
und daß die dritte Informationsverarbeitungseinheit (RMS)
o immer dann, wenn aus dem zweiten Teil-Speicherbereich (S3.2) mindestens ein Wertekontext gelöscht wurde,
o den Inhalt des siebten Speicherbereichs (S7) aktualisiert,
und daß die dritte Informationsverarbeitungseinheit (RMS)
o dadurch als Reason Maintenance System für den dritten Speicherbereich (S3) und den vierten Speicherbereich (S4) arbeitet,
o daß sie Informationen über die Zusammenhänge
- von Wertekontexten,
die im siebten Speicherbereich (S7) abgespeichert sind,
- mit Wertekontexten,
die im vierten Speicherbereich (S4) abgespeichert sind, im fünften Speicherbereich (S5) abspeichert.

2. Vorrichtung nach Anspruch 1.
**gekennzeichnet**
durch Mittel zur Diagnose eines während der Diagnose statischen technischen Systems (tS),
das ist ein technisches System, bei dem die Werte aller abhängigen Parameter
durch eine Situation,
das ist eine Belegung aller frei einstellbaren Parameter des technischen Systems (tS) mit Werten,
eindeutig bestimmt ist,
wobei alle Situationen,
die während der Diagnose am technischen System (tS) auftreten oder eingestellt werden,
im ersten Teil-Speicherbereich (S3.1) des dritten Speicherbereichs (S3) abgespeichert werden.

3. Vorrichtung nach Anspruch 1.
**gekennzeichnet**
durch einen zusätzlichen achten Speicherbereich (S8),
auf den die zweite Informationsverarbeitungseinheit (Inferenzmaschine) Lese- und Schreibzugriff besitzt,
wobei für jeden Zeitpunkt t,
zu dem der Wert eines Parameters des technischen Systems (tS) gemessen oder eingestellt wird,
im achten Speicherbereich (S8) eine Registrierung abgespeichert wird, bestehend
- aus einem Verweis auf den Zeitpunkt t
- und aus einem Verweis auf die Situation, die zum Zeitpunkt t vorliegt,
wobei eine Situation eine Belegung aller frei einstellbaren Parameter mit Werten ist,
- und aus einem Verweis auf die Zustandsmengen, die zum Zeitpunkt t zu dieser Situation gehören,
wobei eine Zustandsmenge eine Belegung von Parametern,
die die Zustände von Komponenten des technischen Systems kennzeichnen,
mit Werten ist,
und daß für jeden Zeitpunkt t,
zu dem der Wert eines Parameters des technischen Systems (tS) gemessen oder eingestellt wird, im ersten Teil-Speicherbereich (S3.1) ein Verweis auf die Situation zum Zeitpunkt t abgespeichert wird
und im zweiten Teil-Speicherbereich (S3.2) ein Verweis auf die Zustandsmengen, die zum Zeitpunkt t zu dieser Situation gehören, abgespeichert werden.

4. Vorrichtung nach einem der Ansprüche 1. bis 3.,
**gekennzeichnet**
durch
o eine vierte Informationsverarbeitungseinheit (Generierer)
o und eine fünfte Informationsverarbeitungseinheit (Abarbeiter)
o und einen neunten Speicherbereich (S9),
wobei die vierte Informationsverarbeitungseinheit (Generierer)
o Schreibzugriff auf den ersten Speicherbereich (S1)
o und Schreibzugriff auf den zweiten Speicherbereich (S2)
o und Schreibzugriff auf auf den neunten Speicherbereich (S9) hat,
hat,
wobei die fünfte Informationsverarbeitungseinheit (Abarbeiter)
o Lesezugriff auf den neunten Speicherbereich (S9) hat, wobei in einer ersten Phase
o die vierte Informationsverarbeitungseinheit (Generierer) automatisch einen Entscheidungsbaum erzeugt
o und im neunten Speicherbereich (S9) abspeichert
und in einer zweiten Phase
o die fünfte Informationsverarbeitungseinheit (Abarbeiter) das technische System (tS) diagnostiziert,
indem sie den Entscheidungsbaum abarbeitet,
wobei der Entscheidungsbaum aus zwei Arten von Knoten besteht, nämlich
o Ergebnisknoten,
das sind Knoten, die einen Verweis auf eine Menge von Komponentenfehlern und einen Verweis auf eine Situation haben
o und Entscheidungsknoten,
das sind Knoten, die einen Verweis auf eine Menge von Maßnahmen haben,
wobei die Nachfolger eines Entscheidungsknotens Ergebnisknoten sind
und wobei ein Ergebnisknoten, der kein Blatt ist, genau einen Entscheidungsknoten als Nachfolger hat,
und wobei die Wurzel und die Blätter des Entscheidungsbaumes Ergebnisknoten sind.

5. Verfahren zur Diagnose eines technischen Systems
mit einem Reason Maintenance System,
o das zur Beschleunigung der Bearbeitung eine Reihe von Wertekontexten bereitstellt,
aus denen die Gültigkeit einer Maßnahme berechnet wird,
o das fokussierend ist
o und das einen internen und einem externen Fokus aufweist,
unter Verwendung der Vorrichtung nach einer der Ansprüche 1. bis 3.
**dadurch gekennzeichnet,**
daß der externe Fokus in zwei Teil-Foki unterteilt ist,
o von denen der eine permanente, nicht austauschbare Wertekontexte
o und der andere zurückziehbare und somit austauschbare Wertekontexte enthält,
daß der interne Fokus aus den externen Foki durch eine Verknüpfung der Wertekontexte zusammengesetzt ist
und daß bei Veränderungen eines der externen Foki automatisch aktualisiert wird.

6. Verfahren nach Anspruch 5.,
**dadurch gekennzeichnet,**
daß bei dynamischen technischen Systemen
die Zeitpunkte als Situationen beschrieben werden
und alle von der Inferenzmaschine ausgewählten Situationen in den permanenten Fokus gelegt werden.

7. Verfahren nach Anspruch 5.,
**dadurch gekennzeichnet,**
daß bei statischen technischen Systemen
zu jedem zu betrachtenden Zeitpunkt die zugehörigen Situationen und die zugehörigen Zustandsmengen abgespeichert werden
und daß für jeden Zeitpunkt hintereinander
die zugehörigen Situationen in den permanenten Fokus
und die zugehörigen Zustandsmengen in den zurückziehbaren Fokus gelegt werden.

8. Verfahren zur automatischen Generierung eines Abarbeiters
- bestehend aus einem statischen Entscheidungsbaum
- und einer Diagnosemaschine
unter Verwendung der Vorrichtung nach einer der Ansprüche 1. bis 3.,
bei dem
o in einem ersten Schritt mit der Diagnosemenge F gestartet wird,
die nur die Diagnose enthält, daß alles in Ordnung ist,
und einer Anfangssituation S,
wobei ein Ergebnisknoten mit Ausgabe F und den entsprechenden Maßnahmen generiert wird,
o in einem zweiten Schritt der Abbruch für den Zweig erfolgt, wenn F sicher genug ist,
anderenfalls ein Verfahren angewandt wird,
um aus S und einem vorgegebenen Kandidatengenerierungsverfahren zur Berechnung von Nachfolgersituationen
- beruhend auf einer Ordnungsrelation zwischen den Situationen und einer vorgegebenen zweidimensionalen Aufwandausgleichsheuristik
- und einer vorgegebenen Aufwand?Nutzen?Heuristik die Situation S' zu finden,
aus der der Parameter resultiert,
der das beste Aufwand?Nutzen?Verhältnis in S' bezüglich F hat,
wobei das Ergebnis der Modellparameter p und die Situation S' ist,
und ein Entscheidungsknoten mit den Maßnahmen im Baum generiert wird,
der in die Situation S' übergeht und p mißt,
o in einem dritten Schritt
für jeden möglichen Wert x von p in S'
die Auswirkungen von x und die daraus resultierende Diagnosemenge F berechnet werden,
wobei ein Ergebnisknoten mit der Ausgabe F erzeugt wird, um dann mit Schritt zwei für jeden Wert x fortzufahren.

9. Verfahren nach Anspruch 8.,
**dadurch gekennzeichnet,**
daß im zweiten Schritt die Aufwand-Nutzen-Heuristik nach Anspruch 8. genutzt wird.
